# EUROPÄISCHE PATENTANMELDUNG

(11) **EP 4 675 810 A1**
(43) Veröffentlichungstag der Anmeldung: **07.01.2026**
(21) Anmeldenummer: 24186249.9
(22) Anmeldetag: 03.07.2024
(51) Int. Cl.: H01M 50/342

(54) **THERMISCHE SCHUTZANORDNUNG FÜR BATTERIEZELLEN**

(71) Anmelder: Cellforce Group GmbH, 72138 Kirchentellinsfurt (DE)
(72) Erfinder: Mutz, Philipp, 72072 Tübingen (DE); Gräf, Jürgen, 72072 Tübingen (DE); Morcos, Manuel, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft eine Schutzanordnung, insbesondere für eine Batteriezelle, aufweisend mindestens ein Trägerelement und mindestens ein Hitzeschutzelement, wobei das Trägerelement dazu eingerichtet ist, das mindestens eine Hitzeschutzelement und mindestens eine Berstmembran aufzunehmen und entlang zumindest einer Raumrichtung über einer batterieseitigen Austrittsöffnung zu positionieren; oder wobei das Trägerelement dazu eingerichtet ist, das mindestens eine Hitzeschutzelement zumindest bereichsweise über einer an oder in einer batterieseitigen Wandung angeordneten Berstmembran zu positionieren, wobei das mindestens eine Hitzeschutzelement und/oder das Trägerelement zumindest eine Aussparung aufweist, welche dazu eingerichtet ist, einen Zugang zu mindestens einer Berstmembran auszubilden. Des Weiteren betrifft die Erfindung eine Batteriezelle mit einer Schutzanordnung.

## Beschreibung

Die Erfindung betrifft eine thermische Schutzanordnung, insbesondere für eine Batteriezelle, aufweisend mindestens ein Trägerelement. Des Weiteren betrifft die Erfindung eine Batteriezelle mit einer thermischen Schutzanordnung.

Elektrochemische Speicher, wie beispielsweise Lithium-Ionen-Batterien, können in bestimmten Grenzsituationen gasförmige Bestandteile freisetzen und somit einen Überdruck im Zellgehäuse einer oder mehrerer Batteriezellen aufbauen. Derartige Grenzsituationen können beispielweise bei einer Überlastung oder einem Defekt der Batteriezelle auftreten. Innerhalb eines Zellgehäuses der Batteriezelle kann ein zu hoher Druck in einem Explosionsrisiko resultieren. Es sind bereits Batteriezellen mit integrierten Sollbruchstellen bekannt, welche bei einem vordefinierten Überdruck aufreißen und den Überdruck abbauen sollen. Beispielsweise können Sollbruchstellen in Form von Stanzungen oder Prägungen in Wandungen von Batteriezellengehäusen eingebracht werden, um einen risikobehafteten Überdruck zu vermeiden.

Weiterhin sind bereits Berstmembranen bekannt, welche außenseitig mit einem Zelldeckel des Zellgehäuses einer Batteriezelle verbunden werden. Problematisch bei einem außenseitigen Verbinden von Berstmembranen, insbesondere durch Schweißen, ist jedoch die Notwendigkeit einer bestimmten Materialstärke der Berstmembran und beispielsweise des Zelldeckels, um ein prozesssicheres Verbinden der Berstmembran mit dem entsprechenden Abschnitt der Batteriezelle zu ermöglichen. Die Erhöhung der Materialstärke von Zellgehäusen und Zelldeckeln zum Ermöglichen einer zuverlässigen Verbindung der Berstmembran steht jedoch einer Gewichtsminimierung und Steigerung der Energiedichte der Batteriezellen entgegen.

Aus diesem Grund werden Berstmembranen überwiegend in Zelldeckeln mit einer ausreichenden Materialstärke angeordnet, um dieses Problem zu umgehen. Der Zelldeckel bildet üblicherweise den höchsten Punkt der Batteriezelle und weist zusätzlich elektrische Anschlüsse auf. Je nach Anordnung und Ausrichtung der Zellstapel können entstehende Gase jedoch nur unzureichend oder nicht vollständig über den Zelldeckel abgeführt werden. Darüber hinaus können die elektrischen Anschlüsse ein Ausbilden eines Gaskanals zum Abführen von Gasen aus den Batteriezellen beeinträchtigen. Insbesondere kann eine in einen Zelldeckel eingebrachte Berstmembran wegen der elektrischen Verbindungen -nur mit einem erhöhten Aufwand gasdicht mit externen Kanälen gekoppelt werden, um ein kontrolliertes Ableiten von gasförmigen Bestandteilen aus einem Batteriesystem oder einem Batteriemodul-Gehäuse mit einer Vielzahl von Batteriezellen zu ermöglichen.

Das Einbringen von Berstmembranen in ein Zellgehäuses ist jedoch im Falle eines thermischen Durchgehens der Batteriezelle problematisch. Das Aktivieren bzw. Aufreißen der Berstmembran bei einem Überdruck in Verbindung mit einem Ausleiten von zunehmend heißeren Gasen oder Flammen kann in einem Beschädigen oder Schmelzen der Wandung des Zellgehäuses aufgrund der geringeren Materialstärke der Wandung resultieren. Hierdurch wird der Überdruck nicht mehr kontrolliert, ausschließlich durch die Berstmembran abgeführt, sodass benachbarte Batteriezellen oder Strukturkomponenten des Batteriesystems zusätzlich beeinträchtigt werden können.

Die vorliegende Erfindung hat daher die Aufgabe, eine Schutzanordnung für ein Zellgehäuse zu schaffen, welche ein unkontrolliertes Abbauen eines Überdrucks von Batteriezellen über Wandungen vermeidet. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine thermische Schutzanordnung bereitgestellt. Die erfindungsgemäße Schutzanordnung kann beispielsweise in einer Batteriezelle oder auf einer Batteriezelle eingesetzt werden.

Die Schutzanordnung weist mindestens ein Trägerelement und mindestens ein Hitzeschutzelement auf. Das mindestens eine Hitzeschutzelement ist durch das Trägerelement ortsfest positioniert. Dabei kann das Hitzeschutzelement unmittelbar am Trägerelement ortsfest positioniert sein und/oder durch das Trägerelement, beispielsweise an einer Wandung, ortsfest positioniert sein. Beispielsweise kann das Trägerelement das Hitzeschutzelement gegen eine oder mehrere Wandungen pressen und somit formschlüssig und/oder kraftschlüssig positionieren.

Die Schutzanordnung weist mindestens eine Berstmembran auf oder ist dazu eingerichtet, im Bereich einer Berstmembran angeordnet zu sein. Insbesondere ist das Trägerelement dazu eingerichtet, das mindestens eine Hitzeschutzelement und mindestens eine Berstmembran aufzunehmen und entlang zumindest einer Raumrichtung über einer batterieseitigen Austrittsöffnung zu positionieren. Alternativ ist das Trägerelement dazu eingerichtet, das mindestens eine Hitzeschutzelement zumindest bereichsweise über einer an oder in einer batterieseitigen Wandung angeordneten Berstmembran zu positionieren. Somit kann die Berstmembran als Bestandteil der Schutzanordnung oder extern bzw. als Bestandteil einer Batteriezelle ausgestaltet sein. In beiden Fällen wird die Berstmembran in oder an einer Austrittsöffnung angeordnet oder bildet eine derartige Austrittsöffnung aus, wenn die Berstmembran aktiviert wird.

Somit kann die Berstmembran unmittelbar in der Schutzanordnung verbaut oder in die Schutzanordnung integriert sein. Bei einer alternativen Ausgestaltung kann die Schutzanordnung eine bereits vorhandene Berstmembran, beispielsweise in einer Wandung eines Zellgehäuses, zumindest bereichsweise umgeben oder im Bereich der Berstmembran angeordnet sein.

Gemäß einem weiteren Aspekt der Erfindung wird eine Batteriezelle bereitgestellt, welche ein Zellgehäuse mit mindestens zwei Wandungen und mindestens einen Zelldeckel mit mindestens einer Wandung aufweist. Das Zellgehäuse ist durch den mindestens einen Zelldeckel fluiddicht verschlossen. Mindestens ein Elektrodenpaket ist in einem Innenvolumen des Zellgehäuses angeordnet.

Das Elektrodenpaket kann beispielsweise Anodenelektroden, Kathodenelektroden und Separatoren aufweisen, welche über entsprechende Ableiter mit Batteriepolen elektrisch verbunden sind. Die Anodenelektroden, Kathodenelektroden und Separatoren können beispielsweise in Folienform gestapelt oder gewickelt sein und somit Elektrodenpakete bilden. Ein oder mehrere derartiger Elektrodenpakete können in dem Innenvolumen des Zellgehäuses angeordnet sein. Weiterhin kann ein Elektrolyt oder eine Elektrolytlösung in dem Innenvolumen des Zellgehäuses vorgesehen sein.

Das Zellgehäuse und/oder der Zelldeckel weisen eine erfindungsgemäße Schutzanordnung auf, welche im Bereich einer Berstmembran angeordnet ist oder eine Berstmembran aufweist.

Im Bereich der Berstmembran kann hierbei auch als "auf" der Berstmembran, "neben" der Berstmembran, "hinter" der Berstmembran, "bereichsweise die Berstmembran überlappend oder überlagernd", die Berstmembran "verdeckend", "über" einer Berstmembran und dergleichen verstanden werden.

Die erfindungsgemäße Schutzanordnung kann gemäß einer vorteilhaften Ausgestaltung intern bzw. im Innenvolumen des Zellgehäuses der Batteriezelle und/oder extern bzw. außerhalb des Innenvolumens des Zellgehäuses an mindestens einer batterieseitigen Wandung angeordnet sein. Somit können auch bestehende Batteriezellen mit einer erfindungsgemäßen Schutzanordnung nachgerüstet werden, welche außenseitig anbringbar ist.

Das mindestens eine Hitzeschutzelement und/oder das Trägerelement weist zumindest eine Aussparung auf, welche dazu eingerichtet ist, einen Zugang zu mindestens einer Berstmembran auszubilden.

Wird die Berstmembran der Batteriezelle ausgelöst entstehen heiße Gase, die oftmals die Berstmembran und die Wandung des Zellgehäuses und/oder des Zelldeckels der Batteriezelle im Bereich der Berstmembran beschädigen. Die erfindungsgemäße Schutzanordnung kann vorteilhafterweise die zur Berstmembran benachbarte Wandung des Zellgehäuses und/oder des Zelldeckels vor Beschädigungen schützen, welche im Falle eines thermischen Durchgehens der Batteriezelle auftreten können. Die Verwendung des Hitzeschutzelements als Hitzeschild kann den Austritt der Gase auf den Querschnitt der Berstmembran und/oder der Austrittsöffnung begrenzen. Durch diese Maßnahme kann die Zellintegrität der thermisch durchgehenden Batteriezelle aufrechterhalten werden.

Die Schutzanordnung bzw. Verstärkungsanordnung kann vorteilhafterweise den Bereich der Batteriezelle mit der Berstmembran thermisch und auch strukturell verstärken. Das Trägerelement kann dabei die Materialstärke einer oder mehrerer Wandungen des Zellgehäuses und/oder des mindestens einen Zelldeckels vergrößern und somit die Zellstabilität erhöhen. Das mindestens eine Hitzeschutzelement kann je nach Ausgestaltung ein Beschädigen oder Schmelzen der Wandung durch Hitzeeinwirkung verhindern oder ein unkontrolliertes Austreten von Gasen durch eine beschädigte Wandung außerhalb eines Querschnitts der Berstmembran verhindern.

Je nach Ausgestaltung kann die flächige Erstreckung des mindestens einen Hitzeschutzelements auf einen Bereich, beispielsweise umfangsseitig, um die Berstmembran begrenzt sein oder entlang einer gesamten Fläche einer Wandung, wie beispielsweise eines Bodens eines Zellgehäuses, ausgebildet sein.

Das mindestens eine Hitzeschutzelement kann technisch besonders einfach befestigt werden, wenn dieses formschlüssig und/oder stoffschlüssig und/oder reibschlüssig durch das Trägerelement ortsfest positionierbar ist.

Gemäß einer weiteren Ausführungsform ist das Trägerelement dazu eingerichtet, das mindestens eine Hitzeschutzelement ortsfest relativ zu einer Berstmembran und/oder relativ zu einer Wandung einer Batteriezelle zu positionieren. Durch diese Maßnahme wird kann eine mögliche Funktion des Hitzeschutzelements, das Ausbreiten von heißen Gasen bei einem thermischen Durchgehen der Batteriezelle über den Querschnitt der Berstmembran hinaus, auch bei stärkeren mechanischen Belastungen der Batteriezelle sichergestellt werden.

Das Material des Hitzeschutzelements kann beliebig gewählt werden, wenn das Trägerelement das mindestens eine Hitzeschutzelement zumindest bereichsweise randseitig umgreift. Hierdurch kann beispielsweise ein Verschweißen, Löten, oder Verkleben des Hitzeschutzelements mit dem Trägerelement entfallen, da das Trägerelement das Hitzeschutzelement rein mechanisch arretieren kann.

Nach einer weiteren Ausführungsform ist das mindestens eine Hitzeschutzelement mittels Durchsetzfügen bzw. Clinchen und/oder Bördeln und/oder Schweißen und/oder Löten mit dem Trägerelement verbunden und/oder durch das Trägerelement ortsfest positioniert. Hierdurch kann das Trägerelement technisch vielseitig dazu eingesetzt werden, das mindestens eine Hitzeschutzelement zu fixieren.

Ein Zugang von Gasen und Flüssigkeiten durch die Schutzanordnung zur Berstmembran kann optimiert werden, wenn das Trägerelement eine Aussparung aufweist, welche zumindest bereichsweise mit der Aussparung des mindestens einen Hitzeschutzelements korrespondiert. Bei einer derartigen Ausgestaltung können das Trägerelement und das mindestens eine Hitzeschutzelement entsprechende Aussparungen aufweisen. Die Berstmembran kann hierbei mit einer Wandung des Zellgehäuses und/oder des Zelldeckels verbunden oder in diese integriert sein. Die Schutzanordnung kann beispielsweise an der Wandung mit der Berstmembran befestigt sein, um eine relative Positionsänderung zu der Berstmembran zu vermeiden.

Eine derartige Befestigung der Schutzanordnung an einer oder mehreren Wandungen kann beispielsweise durch einen Reibschluss und/oder einen Formschluss und/oder einen Stoffschluss zwischen mindestens einer Wandung und der Schutzanordnung erfolgen. Beispielsweise kann das mindestens eine Trägerelement für eine Verbindung der Schutzanordnung mit dem Zellgehäuse und/oder Zelldeckel herangezogen werden.

Gemäß einem weiteren Ausführungsbeispiel ist die Berstmembran mit dem Trägerelement verbunden oder ist integral in das Trägerelement eingebracht und weist eine Querschnittsfläche auf, welche zumindest bereichsweise sich mit einer Querschnittsfläche des mindestens einen Hitzeschutzelements überlappt. Durch diese Maßnahme kann die Berstmembran in die Schutzanordnung integriert werden. Beispielsweise kann die Berstmembran mit dem Trägerelement verschweißt, verlötet, verklemmt bzw. gestanzt sein. Je nach Ausgestaltung kann die Berstmembran in Form eines oder mehrerer Sollbruchstellen in das Trägerelement integriert sein. Derartige Sollbruchstellen können beispielsweise in einem Abschnitt des Trägerelements mit einer reduzierten Materialstärke eingebracht sein.

Je nach Ausgestaltung können die Sollbruchstellen in Form von Linien, Kreisen, Ovalen, Vielecken, Überschneidungen und dergleichen realisiert sein. Beispielsweise können die Sollbruchstellen aus geraden oder krummen Linien mit und/oder ohne Überkreuzungen geformt sein. Beispielsweise kann eine in die Wandung und/oder das Trägerelement integrierte Berstmembran Sollbruchstellen in Kreuzform, sogenannte single-Y-Form, double-Y-Form, mehrere Kreisformen mit Berührungspunkten und/oder Überschneidungen und dergleichen umgesetzt sein.

Der Zugang von Gasen und Flüssigkeiten während einer Aktivierung der Berstmembran kann optimiert werden, wenn die Aussparung des mindestens einen Hitzeschutzelements eine Querschnittsfläche und/oder eine Querschnittsform aufweist, welche einer Querschnittsfläche und/oder eine Querschnittsform einer Berstmembran entspricht oder kleiner ausgestaltet ist.

Das Trägerelement kann technisch besonders einfach hergestellt sein, wenn dieses in Form eines Strangpressprofils ausgestaltet ist. Bei einer alternativen oder zusätzlichen Ausgestaltung ist das Trägerelement in Form einer zumindest bereichsweise umgeformten Platte ausgestaltet.

Bei einer vorteilhaften Ausgestaltung weist das Trägerelement zumindest bereichsweise ausgebildete Befestigungsabschnitte auf. Derartige Befestigungsabschnitte können bereits bei der Herstellung eines als Strangpressprofil ausgestalteten Trägerelements eingebracht werden. Beispielsweise kann das Trägerelement einen Strangpressquerschnitt in U-Form, W-Form, O-Form und dergleichen aufweisen, welcher einen Aufnahmeabschnitt für das Hitzeschutzelement bereitstellt. Der Aufnahmeabschnitt ist dazu eingerichtet eine Bewegung des mindestens einen Hitzeschutzelements in zumindest einer Raumrichtung zu begrenzen und/oder zu verhindern.

Bei einem als Strangpressprofil und auch bei einem als Platte bzw. Blech geformten Trägerelement können Bereiche oder Abschnitte nachträglich geformt, aufgebracht und/oder gebogen werden, um Befestigungsabschnitte auszubilden.

Die Befestigungsabschnitte können je nach Ausgestaltung einen oder mehrere Aufnahmeabschnitte für das mindestens eine Hitzeschutzelement definieren bzw. ausbilden.

Nach einer weiteren Ausführungsform sind die zumindest bereichsweise ausgebildeten Befestigungsabschnitte des Trägerelements dazu eingerichtet, das mindestens eine Hitzeschutzelement am Trägerelement zu befestigen und/oder das mindestens eine Hitzeschutzelement zumindest bereichsweise zwischen dem Trägerelement und mindestens einer Wandung zu befestigen. Hierdurch können die Befestigungsabschnitte dazu verwendet werden, das Hitzeschutzelement unmittelbar am Trägerelement zu arretieren. Hierdurch kann das Hitzeschutzelement an einer einem Elektrodenstapel zugewandten Seite des Trägerelements positioniert werden und damit auch das Trägerelement vor einer Beschädigung durch heiße Gase während eines thermischen Durchgehens der Batteriezelle schützen.

Alternativ oder zusätzlich kann mindestens ein Hitzeschutzelement durch das Trägerelement bzw. die Befestigungsabschnitte des Trägerelements gegen eine oder mehrere Wandungen des Zellgehäuses oder Zelldeckels fixiert werden. Bei dieser Ausgestaltung kann das mindestens eine Hitzeschutzelement an einer einem Elektrodenstapel abgewandten Seite des Trägerelements und damit zwischen mindestens einer Wandung und dem Trägerelement angeordnet sein. Diese Maßnahme ermöglicht beispielsweise eine zumindest bereichsweise Verkapselung des Hitzeschutzelements, sodass auch rieselfähige Materialien, wie beispielsweise Pulver, Körner, Flocken, Fasern und dergleichen als Hitzeschutzelemente verwendet werden können.

Das mindestens eine Hitzeschutzelement kann besonders flexibel gewählt und vielseitig ausgestaltet sein, wenn dieses einlagig und/oder mehrlagig ausgestaltet ist. Dabei kann das Hitzeschutzelement aus einem oder mehreren Komponenten bestehen, welche eine erhöhte Hitzeresistenz gegenüber der mindestens einen Wandung aufweisen. Bevorzugterweise ist das mindestens eine Hitzeschutzelement aus einem Metall, einer Metalllegierung, einer Keramik oder einem Keramikfaserverbundwerkstoff, einem Glas oder einem Glasfaserverbundwerkstoff, einem mineralischen Werkstoff oder Verbundwerkstoff, einem Kohlenstoff oder einem Kohlenstoffverbundwerkstoff hergestellt. Somit können auch Materialien wie beispielsweise Graphit, Glimmer und dergleichen als Hitzeschutzelement verwendet werden.

Die erhöhte Hitzeresistenz und der hieraus resultierende Schutz der Wandung im Bereich der Berstmembran vor einem unkontrollierten Aufreißen oder Schmelzen kann durch einen gegenüber der Wandung höheren Schmelzpunkt und/oder eine schnellere Wärmeverteilung durch erhöhte Wärmeleitfähigkeit und/oder durch eine höhere Wärmekapazität realisiert sein.

Gemäß einem weiteren Ausführungsbeispiel ist die mindestens eine Berstmembran in einen Abschnitt des Trägerelements hineingearbeitet. Hierdurch kann die Berstmembran als ein integraler Bestandteil des Trägerelements ausgestaltet sein. Beispielsweise kann die Berstmembran durch ein Stanzen oder Fräßen von Sollbruchstellen in einen Abschnitt des Trägerelements ausgebildet werden.

Bei einer alternativen Ausgestaltung ist die Berstmembran an einer dem Hitzeschutzelement zugewandten Seite des Trägerelements mit dem Trägerelement verbunden ist. Eine derartige Berstmembran kann in einer Öffnung oder Aussparung des Trägerelements positioniert und stoffschlüssig, beispielsweise durch Schweißen, verbunden werden. Die Anordnung der Berstmembran im Bereich des Hitzeschutzelements kann innerhalb einer Aussparung erfolgen, sodass der Aufnahmeabschnitt des Hitzeschutzelements durch die Berstmembran nicht beeinträchtigt wird.

Alternativ kann die Berstmembran in den Aufnahmeabschnitt bzw. Aufnahmeraum des Hitzeschutzelements zwischen den Befestigungsabschnitten des Trägerelements hineinragen. Das Hitzeschutzelement kann bei einer derartigen Ausgestaltung eine Aussparung oder Nut aufweisen, in welche die Berstmembran zumindest bereichsweise hineinragen kann, um die Bildung von Hohlräumen innerhalb der Schutzanordnung zu vermeiden.

Gemäß einer weiteren alternativen Ausführungsform ist die Berstmembran an einer dem Hitzeschutzelement abgewandten Seite des Trägerelements mit dem Trägerelement verbunden. Die Berstmembran kann hierbei als eine Schicht oder Ebene zwischen dem Trägerelement und der Wandung ausgestaltet sein. Bei einer alternativen Ausgestaltung kann das Trägerelement eine der Wandung zugewandte Aussparung aufweisen, um die Berstmembran vollständig oder zumindest teilweise aufzunehmen.

Das mindestens eine Trägerelement ist gemäß einer weiteren Ausführungsform dazu eingerichtet, mit mindestens einer Wandung verbunden zu werden. Hierdurch kann die Schutzanordnung, durch das Trägerelement am Zellgehäuse und/oder am Zelldeckel befestigt werden.

Das Trägerelement kann technisch besonders einfach mit dem Zelldeckel und/oder Zellgehäuse verbunden werden, wenn dieses durch die mindestens eine Wandung hindurch verbindbar ist. Dies kann beispielsweise durch von außen eingebrachte Schweißverbindungen und/oder Klemmverbindungen realisiert werden.

Gemäß einer alternativen oder zusätzlichen Ausgestaltung ist das Trägerelement durch das Trägerelement hindurch mit der mindestens einen Wandung verbindbar. Diese Maßnahme erfordert einen Werkzeugzugang zum Innenvolumen des Zellgehäuses, sodass das entsprechende Werkzeug zuerst auf das Trägerelement einwirken kann. Somit kann das Trägerelement durch Schweißen oder Stanzen bzw. Verformen mit mindestens einer Wandung verbunden werden.

Nach einer weiteren Ausführungsform ist die mindestens eine Wandung als eine Wandung eines Zellgehäuses oder als eine Wandung eines Zelldeckels ausgestaltet. Hierdurch kann die Schutzanordnung in oder an Batteriezellen eingesetzt werden, bei welchen die Berstmembran in das Zellgehäuse oder in den mindestens einen Zelldeckel eingebracht ist. Dabei kann die Schutzanordnung sich über einen Teil oder über die gesamte Ausdehnung der Wandung oder mehrerer Wandungen erstrecken, um einen Schutz dieser Wandung zu gewährleisten.

Nachstehend werden mehrere Ausführungsbeispiele der Erfindung anhand der Zeichnungen näher erläutert. Es zeigen:
Fig. 1 eine Schnittdarstellung einer erfindungsgemäßen Batteriezelle zum Veranschaulichen einer Schutzanordnung gemäß einer ersten Ausführungsform der Erfindung,
Fig. 2 eine Schnittdarstellung einer erfindungsgemäßen Batteriezelle zum Veranschaulichen einer Schutzanordnung gemäß einer zweiten Ausführungsform der Erfindung,
Fig. 3 eine Schnittdarstellung einer erfindungsgemäßen Batteriezelle zum Veranschaulichen einer Schutzanordnung gemäß einer dritten Ausführungsform der Erfindung,
Fig. 4 eine Schnittdarstellung einer erfindungsgemäßen Batteriezelle zum Veranschaulichen einer Schutzanordnung gemäß einer vierten Ausführungsform der Erfindung,
Fig. 5 eine Draufsicht auf eine erfindungsgemäße Schutzanordnung zum Veranschaulichen einer zusätzlichen Sicherung des Hitzeschutzelements,
Fig. 6 eine Schnittdarstellung einer erfindungsgemäßen Batteriezelle zum Veranschaulichen einer Schutzanordnung gemäß einer fünften Ausführungsform der Erfindung, und
Fig. 7 eine Schnittdarstellung einer erfindungsgemäßen Batteriezelle zum Veranschaulichen einer Schutzanordnung gemäß einer sechsten Ausführungsform der Erfindung.

In den Abbildungen kennzeichnen identische Bezugsziffern dieselben Elemente bzw. konstruktiven Bestandteile.

Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

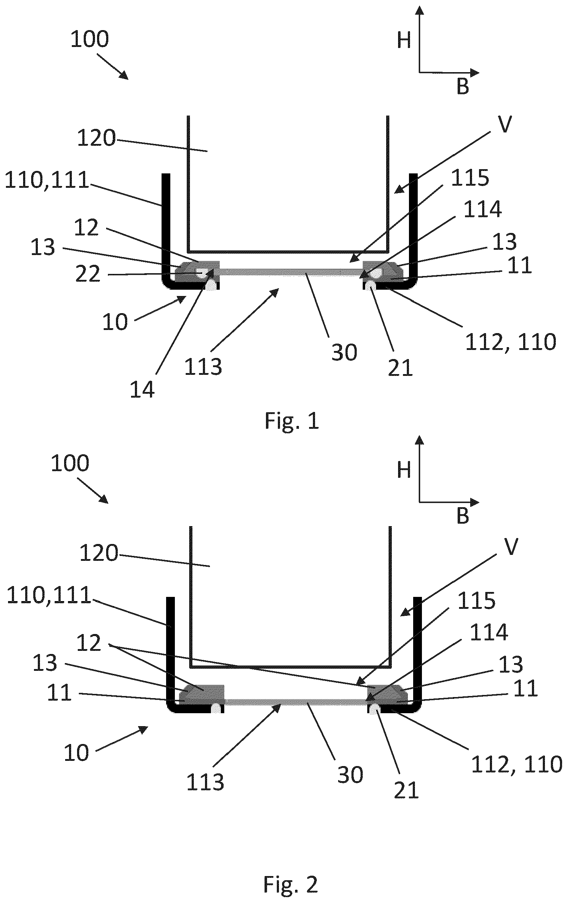

In der Fig. 1 ist eine Schnittdarstellung einer erfindungsgemäßen Batteriezelle 100 zum Veranschaulichen einer Schutzanordnung 10 gemäß einer ersten Ausführungsform der Erfindung gezeigt.

Die Batteriezelle 100 weist ein Zellgehäuse 110 auf, welches beispielhaft in Form einer sogenannten Can ausgestaltet ist. Dabei weist das Zellgehäuse 110 beispielhaft vier Wandungen 111, 112 auf, von welchen in der Fig. 1 nur drei Wandungen sichtbar sind.

Eine Wandung 112 des Zellgehäuses 110 ist als ein Boden 112 der Batteriezelle 100 ausgebildet. An der als Boden ausgestalteten Wandung 112 ist beispielhaft eine Berstmembran 30 vorgesehen, um bei einem Überdruck in einen Innenvolumen V des Zellgehäuses 110 den Überdruck bodenseitig ableiten zu können.

Weiterhin sind zwei nicht dargestellte Zelldeckel vorgesehen, die das Zellgehäuse 110 fluiddicht verschließen. In dem Innenvolumen V des Zelldeckels 110 sind ein oder mehrere Elektrodenpakete 120 angeordnet.

Das mindestens eine Elektrodenpaket 120 kann, nicht weiter bezifferte oder dargestellte, beispielsweise Anodenelektroden, Kathodenelektroden und Separatoren aufweisen, welche über entsprechende Ableiter mit Batteriepolen elektrisch verbunden sind. Die Anodenelektroden, Kathodenelektroden und Separatoren können beispielsweise in Folienform gestapelt oder gewickelt sein und somit Elektrodenpakete 120 bilden. Weiterhin kann ein Elektrolyt oder eine Elektrolytlösung in dem Innenvolumen V des Zellgehäuses 110 vorgesehen sein.

Das Zellgehäuse 110 weist im dargestellten Ausführungsbeispiel eine erfindungsgemäße Schutzanordnung 10 auf, welche eine Berstmembran 30 aufweist.

Die Schutzanordnung 10 ist im Innenvolumen V des Zellgehäuses 110 befestigt. Dabei weist die Schutzanordnung 10 beispielhaft ein Trägerelement 11 und ein Hitzeschutzelement 12 auf. Weiterhin weist die Schutzanordnung 10 eine Berstmembran 30 auf.

Das Hitzeschutzelement 12 ist durch das Trägerelement 11 ortsfest positioniert und ist unmittelbar am Trägerelement 11 ortsfest positioniert. Hierfür weist das Trägerelement 11 Befestigungsabschnitte 13 auf, welche einen Aufnahmeraum oder Aufnahmeabschnitt für das Hitzeschutzelement 12 definieren.

Im dargestellten Ausführungsbeispiel ist das Trägerelement 11 als ein Strangpressprofil ausgestaltet, bei dem die Befestigungsabschnitte 13 randseitig angeordnet sind und ein Verschieben oder Verrutschen des Hitzeschutzelements 12 entlang einer Höhenrichtung H und entlang einer Breitenrichtung B unterbinden können. Die Befestigungsabschnitte 13 umgreifen hierfür das Hitzeschutzelement 12 an zwei einander gegenüberliegenden Rändern entlang der Breitenrichtung B. Ein derartiges Trägerelement 11 kann auch durch ein Umbiegen der Ränder zu Befestigungsabschnitten 13 hergestellt werden.

Die Schutzanordnung 10 ist im Innenvolumen V des Zellgehäuses 110 mit Hilfe des Trägerelements 11 befestigt. Das Trägerelement 11 ist dabei außenseitig mit dem Boden 112 des Zellgehäuses 110 verbunden. Hierfür sind mehrere Verbindungen 21 in Form von Schweißverbindungen zwischen dem Boden 112 und dem Trägerelement 11 im Bereich einer batterieseitigen Austrittsöffnung 113 bzw. Öffnung 113 des Zellgehäuses 110 eingebracht.

Die Austrittsöffnung 113 des Zellgehäuses 110 fungiert im gezeigten Ausführungsbeispiel als eine Austrittsöffnung für Gase und Flüssigkeiten bei einer Aktivierung der Berstmembran 30. D.h. durch die Austrittsöffnung113 können Gase und Flüssigkeiten aus dem Innenvolumen V des Zellgehäuses 110, beispielsweise in eine Umgebung der Batteriezelle 100, entweichen.

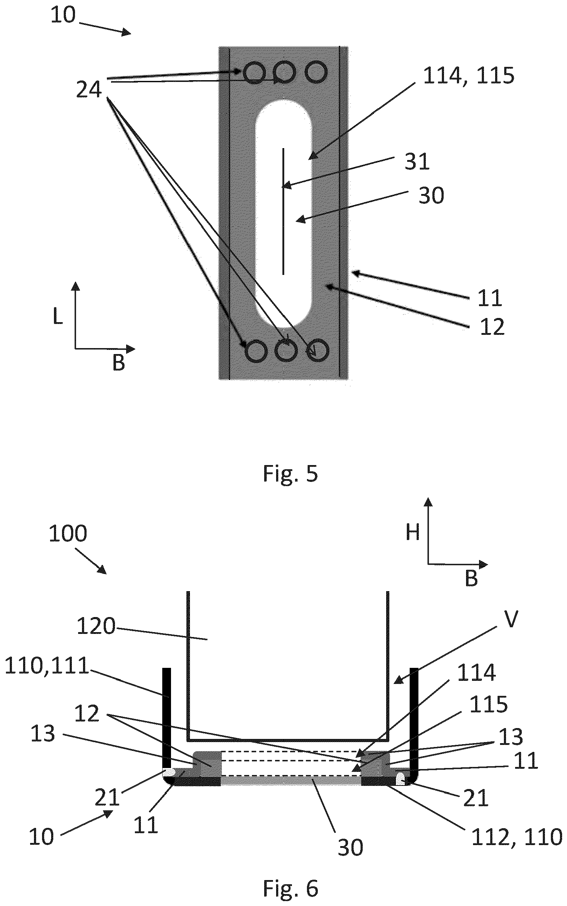

Bei der Aktivierung der Berstmembran 30 kann beispielsweise mindestens eine nicht dargestellte Sollbruchstelle 31 (s. Fig. 5) oder Perforierung der Berstmembran 30 aufreißen oder brechen, um eine fluidführende Verbindung zwischen der Austrittsöffnung 113 und dem Innenvolumen V des Zellgehäuses 110 herzustellen. Die Berstmembran 30 erfüllt somit die Aufgabe einer Schutzvorrichtung vor einem Überdruck und/oder einer Übertemperatur in der Batteriezelle 100.

Die Berstmembran 30 ist mit dem Trägerelement 11 verbunden. Dabei ist die Berstmembran 30 im gezeigten Ausführungsbeispiel an einer dem Elektrodenpaket 120 bzw. dem Hitzeschutzelement 12 zugewandten Seite des Trägerelements 11 angeordnet und durch mindestens eine Verbindung 22 in Form von einer beispielhaften Schweißverbindung mit dem Trägerelement 11 verbunden. Die Verbindung 22 kann analog zu der Schweißverbindung 21 des Trägerelements 11 mit dem Boden 112 vorzugsweise eine umlaufende Verbindung 22 sein.

Im gezeigten Ausführungsbeispiel ist die Berstmembran 30 in Höhenrichtung H über einer Aussparung 114 des Trägerelements 11 angeordnet und verdeckt diese. Hierdurch überlagern sich die Querschnitte der Berstmembran 30 und der Aussparung 114 des Trägerelements 11 zumindest bereichsweise.

Die Berstmembran 30 ragt im ersten Ausführungsbeispiel in einen Aufnahmeabschnitt des Hitzeschutzelements 12 hinein. Das Hitzeschutzelement 12 weist eine mit der Aussparung 114 des Trägerelements 11 korrespondierende Aussparung 115 auf, sodass Gase und Flüssigkeiten über alle drei Aussparungen 113, 114, 115 aus dem Innenvolumen V hinausleitbar sind, wenn die Berstmembran 30 aktiviert wird.

Damit die Berstmembran 30 und das Hitzeschutzelement 12 gemeinsam in dem Aufnahmeabschnitt zwischen den Befestigungsabschnitten 13 platziert werden können, ist eine dem Trägerelement 11 zugewandte Ausnehmung oder Vertiefung 14 in dem Hitzeschutzelement 12 vorgesehen, um die Berstmembran 30 zumindest bereichsweise aufzunehmen.

Die Schutzanordnung 10 oder Teile der Schutzanordnung 10, wie beispielsweise das Trägerelement 11, das Hitzeschutzelement 12 und je nach Ausführung die Berstmembran 30 können lokal im Bereich der Aussparung oder Öffnung 113 der bodenseitigen Wandung 112 positioniert sein und insbesondere die Öffnung 113 der bodenseitigen Wandung 112 umfangsseitig umgeben oder sich über die gesamte bodenseitige Wandung 112 in Längenrichtung L (s. Fig. 5) erstrecken.

Die Fig. 2 zeigt eine Schnittdarstellung einer erfindungsgemäßen Batteriezelle 100 zum Veranschaulichen einer Schutzanordnung 10 gemäß einer zweiten Ausführungsform der Erfindung. Im Unterschied zum ersten Ausführungsbeispiel, ist hier die Berstmembran 30 vollständig in das Trägerelement 11 integriert.

Dies kann beispielsweise durch ein Einbringen der Berstmembran 30 in die Aussparung 114 des Trägerelements 11 oder beispielsweise durch ein Einprägen von Sollbruchstellen 31 (s. Fig. 5) in einen Abschnitt des Trägerelements 11 im Bereich der Aussparung 115 des Hitzeschutzelements 12 und der Öffnung 113 der bodenseitigen Wandung 112 umgesetzt werden.

Das Trägerelement 11 ist hier analog zum ersten Ausführungsbeispiel durch die bodenseitige Wandung 112 des Zellgehäuses 110 hindurch mit dem Zellgehäuse 110 verbunden.

Aufgrund der in das Trägerelement 11 integrierten Berstmembran 30 ist der Aufnahmeabschnitt zwischen den Befestigungsabschnitten 13 größer ausgestaltet, wodurch ein größeres Volumen des Hitzeschutzelements 12 genutzt werden kann.

Je nach Ausgestaltung kann das Hitzeschutzelement 12 durch die Befestigungsabschnitte 13 geklemmt oder gepresst sein, um ein relatives Verschieben des Hitzeschutzelements 12, insbesondere in Längenrichtung L, zu vermeiden.

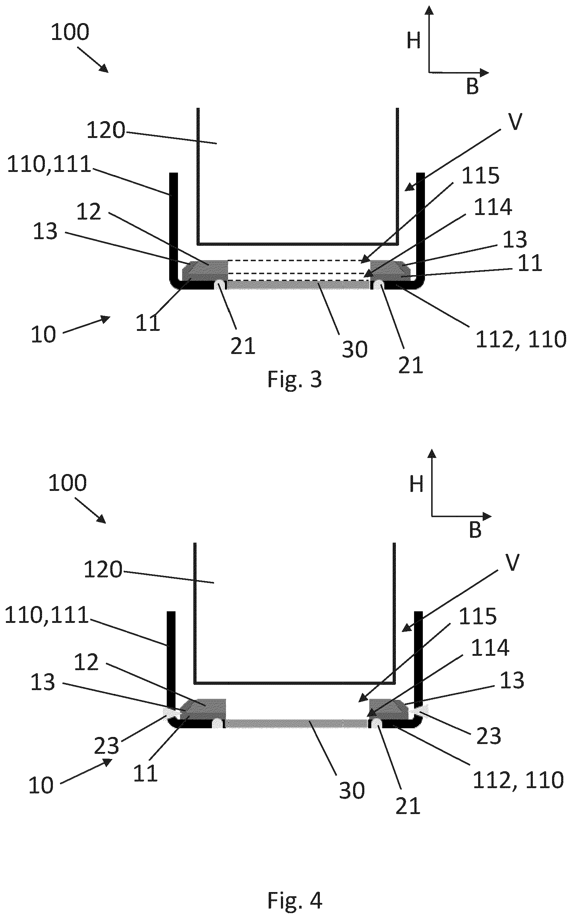

In der Fig. 3 ist eine weitere Schnittdarstellung einer erfindungsgemäßen Batteriezelle 100 zum Veranschaulichen einer Schutzanordnung 10 gemäß einer dritten Ausführungsform der Erfindung illustriert. Im Unterschied zu den bereits gezeigten Ausführungsformen, ist hier die Schutzanordnung 10 dazu eingerichtet, im Bereich einer gehäuseseitig angeordneten Berstmembran 30 angeordnet zu sein.

Die Berstmembran 30 ist beispielhaft in einen Abschnitt des Zellgehäuses 110 integriert. Vorteilhafterweise ist die Berstmembran 30 anstelle der Öffnung 113 der bodenseitigen Wandung 112 in die Wandung 112 eingeprägt.

Die Schutzanordnung 10 ist im Bereich der Berstmembran 30 angeordnet und umgibt diese zumindest bereichsweise umfangsseitig entlang der Breiten-Längen-Ebene, welche in Fig. 5 schematisch visualisiert ist.

Die Fig. 4 zeigt eine Schnittdarstellung einer erfindungsgemäßen Batteriezelle 100 zum Veranschaulichen einer Schutzanordnung 10 gemäß einer vierten Ausführungsform der Erfindung. Analog zum dritten Ausführungsbeispiel ist die Berstmembran 30 in die bodenseitige Wandung 112 des Zellgehäuses 110 integriert. Dieses Ausführungsbeispiel veranschaulicht alternative Befestigungsmethoden der Schutzanordnung 10 mit dem Zellgehäuse 110.

In den ersten drei Ausführungsbeispielen ist die Schutzanordnung 10 mittels des Trägerelements 11 mit der bodenseitigen Wandung 112 des Zellgehäuses 110, beispielsweise durch Schweißverbindungen 21 verbunden. Im vierten Ausführungsbeispiel hingegen ist die Schutzanordnung 10 durch seitliches Quetschen oder Verformen der bodenseitigen Wandung 112 und/oder der seitlich angrenzenden Wandungen 111 des Zellgehäuses 110 ortsfest im Innenvolumen V des Zellgehäuses 110 arretiert. Die entsprechenden Verbindungen 23 in Form von Quetschverbindungen oder lokalen Verformungen sind schematisch illustriert. Zusätzlich oder alternativ können umlaufende Schweißverbindungen 21 im Bereich der oder um die Berstmembran 30 vorgesehen sein.

Die Fig. 5 zeigt eine Draufsicht auf eine erfindungsgemäße Schutzanordnung 10 zum Veranschaulichen einer zusätzlichen Sicherung des Hitzeschutzelements 12 und zum Veranschaulichen einer generellen Anordnung bzw. Ausrichtung der Schutzanordnung 10 im Bereich der Berstmembran 30. Schematisch ist auch eine beispielhafte Sollbruchstelle 31 der Berstmembran 30 gezeigt.

Beispielhaft ist eine Schutzanordnung 10 gezeigt, die entlang der Höhenrichtung H auf einer gehäuseseitigen Berstmembran 30 aufliegt. Der Übersicht halber sind die Wandungen 111, 112 des Zellgehäuses 110 nicht dargestellt.

Die Aussparungen 114, 115 des Trägerelements 11 und des Hitzeschutzelements 12 zum Ermöglichen einer fluidführenden Verbindung zur Berstmembran 30 weisen beispielhaft einen identischen Querschnitt und eine identische Querschnittsform auf. Dabei entspricht die Querschnittsform im Wesentlichen der Querschnittsform der Berstmembran 30.

Die Fig. 5 veranschaulicht, dass die Berstmembran 30 umfangsseitig von dem Hitzeschutzelement 12 umgeben wird, um ein Ausbreiten von heißen Gasen bei einem thermischen Durchgehen der Batteriezelle 100 auf den Querschnitt der Ausnehmung 115 des Hitzeschutzelements zu begrenzen. In diesem Ausführungsbeispiel wird die Ausbreitung der Gase bei einem Aktivieren der Berstmembran 30 auch gleichzeitig auf den Querschnitt der Berstmembran 30 begrenzt.

Bei diesem Ausführungsbeispiel sind zusätzliche Verbindungen 24 zwischen dem Hitzeschutzelement 12 und dem Trägerelement 11 vorgesehen, um ein Verschieben des Hitzeschutzelements 12 relativ zum Trägerelement 11 zu verhindern. Hierbei ist das Hitzeschutzelement 12 mittels Verbindungen 24 in Form von Durchsetzfügen bzw. Clinchen mit dem Trägerelement 11 verbunden.

In der Fig. 6 ist eine Schnittdarstellung einer erfindungsgemäßen Batteriezelle 100 zum Veranschaulichen einer Schutzanordnung 10 gemäß einer fünften Ausführungsform der Erfindung gezeigt. Im Unterschied zu den bereits beschriebenen Ausführungsbeispielen, ist hier das mindestens eine Hitzeschutzelement 12 durch das Trägerelement 11 an der bodenseitigen Wandung 112 des Zellgehäuses 110 ortsfest positioniert.

Dabei ist das Hitzeschutzelement 12 in Höhenrichtung H zwischen dem Trägerelement 11 und der bodenseitigen Wandung 112 angeordnet. Je nach Ausgestaltung kann das Hitzeschutzelement 12 mit oder ohne Vorspannung zwischen dem Trägerelement 11 und der bodenseitigen Wandung 112 angeordnet sein. Bei diesem Ausführungsbeispiel ist die Berstmembran 30 beispielhaft in die bodenseitige Wandung 112 des Zellgehäuses 110 hineingeprägt.

Die Befestigungsabschnitte 13 des Trägerelements 11 bilden hier einen Aufnahmeabschnitt für das Hitzeschutzelement 12, welcher seitlich und entlang der Höhenrichtung H einseitig begrenzt ist.

Die Befestigung des Trägerelements 11 an dem Zellgehäuse 110 kann beispielsweise durch Verbindungen in Form von Schweißverbindungen 21 erfolgen, welche durch die bodenseitige Wandung 112 und/oder durch die benachbarten Wandungen bzw. Seitenwandungen 111 hindurch in das Trägerelement 11 einbringbar sind.

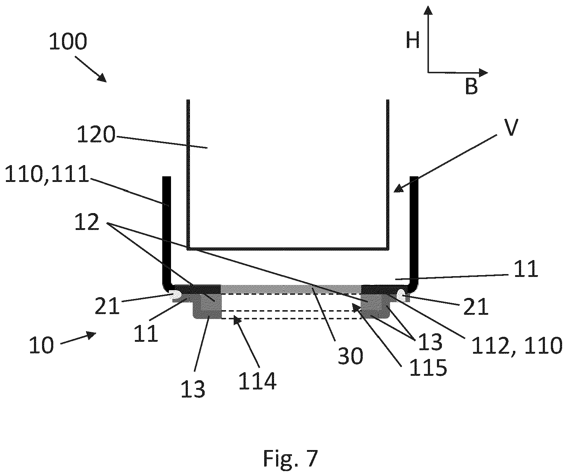

In der Fig. 7 ist eine weitere Schnittdarstellung einer erfindungsgemäßen Batteriezelle 100 zum Veranschaulichen einer Schutzanordnung 10 gemäß einer sechsten Ausführungsform der Erfindung gezeigt. Die bisher veranschaulichten Ausführungsbeispiele zeigen Schutzanordnungen 10, welche intern bzw. in dem Innenvolumen V des Zellgehäuses 110 angeordnet sind. Hierdurch kann bei einem Auslösen der Berstmembran 30 ein Schmelzen der die Berstmembran 30 und/oder die Austrittsöffnung 113 umgebenden Wandungen 111, 112 verhindert oder zumindest zeitlich verzögert werden.

Im Unterschied zu den bereits gezeigten Ausführungsbeispielen Veranschaulicht die Fig. 7 eine Schutzanordnung 10, welche extern bzw. außenseitig an einer Batteriezelle 100 ortsfest positioniert ist. Analog zum fünften Ausführungsbeispiel ist das Trägerelement 11 dazu eingerichtet, das Hitzeschutzelement 12 aufzunehmen und an der Wandung 112 anzuordnen. Dabei wird das Hitzeschutzelement 12 zwischen der Wandung 112 und dem Trägerelement 11 geklemmt und somit ortsfest positioniert. Das Trägerelement 11 wird beispielhaft durch Schweißverbindungen 21 mit der Wandung 112 des Zellgehäuses 110 verbunden.

Das Trägerelement 11 ermöglicht, generell und nicht auf ein bestimmtes Ausführungsbeispiel beschränkt, ein Befestigen des Hitzeschutzelements 12, sodass ein Schweißen, Löten, Kleben oder Fügen des Hitzeschutzelements 12 nicht erforderlich ist. Somit können auch nichtmetallische Materialien, die nicht direkt mit der Wandung 111, 112 verbindbar sind, für das Hitzeschutzelement 12 eingesetzt werden.

Zu derartigen Materialien können keramische Materialien, Faserverbundwerkstoffe, mineralische Materialien wie Glimmer, und dergleichen zählen.

Je nach Ausgestaltung kann das Trägerelement 11 mit mindestens einer Wandung 111, 112 verklebt und/oder verclincht und/oder verlötet und/oder verschweißt und/oder eingeklemmt sein. Hierdurch kann das Trägerelement 11 mit dem Zellgehäuse 110 fest verbunden werden. Das Hitzeschutzelement 12 kann durch Kleben und/oder Schweißen und/oder Löten und/oder einen Formschluss und/oder einen Reibschluss mit dem Trägerelement 11 verbunden werden.

Die Aussparungen 114, 115 des Trägerelements 11 und des Hitzeschutzelements 12 überlagern sich zumindest bereichsweise in Breitenrichtung B und/oder Längenrichtung L mit dem Querschnitt der batterieseitig angeordneten Berstmembran 30, um einen Austritt von Gasen aus der Berstmembran 30 zu ermöglichen.

## Patentansprüche

1. Thermische Schutzanordnung (10), insbesondere für eine Batteriezelle (100), aufweisend mindestens ein Trägerelement (11) und mindestens ein Hitzeschutzelement (12), wobei das Trägerelement (11) dazu eingerichtet ist,
- das mindestens eine Hitzeschutzelement (12) und mindestens eine Berstmembran (30) aufzunehmen und entlang zumindest einer Raumrichtung (B, H, L) über einer batterieseitigen Austrittsöffnung (113) zu positionieren; oder
- das mindestens eine Hitzeschutzelement (12) zumindest bereichsweise über einer an oder in einer batterieseitigen Wandung (111, 112) angeordneten Berstmembran (30) zu positionieren,
wobei das mindestens eine Hitzeschutzelement (12) und/oder das Trägerelement (11) zumindest eine Aussparung (114, 115) aufweist, welche dazu eingerichtet ist, einen Zugang zu mindestens einer Berstmembran (30) auszubilden.

2. Schutzanordnung nach Anspruch 1, wobei das mindestens eine Hitzeschutzelement (12) formschlüssig und/oder stoffschlüssig und/oder reibschlüssig durch das Trägerelement (11) oder am Trägerelement (11) positionierbar ist, wobei das Trägerelement (11) dazu eingerichtet ist, das mindestens eine Hitzeschutzelement (12) ortsfest relativ zu einer Berstmembran (30) und/oder relativ zu einer Wandung (111, 112) einer Batteriezelle (100) zu positionieren.

3. Schutzanordnung nach Anspruch 1 oder 2, wobei das Trägerelement (11) das mindestens eine Hitzeschutzelement (12) zumindest bereichsweise randseitig umgreift.

4. Schutzanordnung nach einem der Ansprüche 1 bis 3, wobei das mindestens eine Hitzeschutzelement (12) mittels Durchsetzfügen (24) und/oder Bördeln und/oder Schweißen (21) und/oder Löten mit dem Trägerelement (11) verbunden und/oder durch das Trägerelement (11) ortsfest positioniert ist.

5. Schutzanordnung nach einem der Ansprüche 1 bis 4, wobei das Trägerelement (11) eine Aussparung (114) aufweist, welche zumindest bereichsweise mit der Aussparung (115) des mindestens einen Hitzeschutzelements (12) korrespondiert.

6. Schutzanordnung nach einem der Ansprüche 1 bis 4, wobei die Berstmembran (30) mit dem Trägerelement (11) verbunden ist oder integral in das Trägerelement (11) eingebracht ist und eine Querschnittsfläche aufweist, welche zumindest bereichsweise sich mit einer Querschnittsfläche des mindestens einen Hitzeschutzelements (12) überlappt.

7. Schutzanordnung nach einem der Ansprüche 1 bis 6, wobei die Aussparung (115) des mindestens einen Hitzeschutzelements (12) eine Querschnittsfläche und/oder eine Querschnittsform aufweist, welche einer Querschnittsfläche und/oder eine Querschnittsform der Berstmembran (30) entspricht oder kleiner ausgestaltet ist.

8. Schutzanordnung nach einem der Ansprüche 1 bis 7, wobei das Trägerelement (11) in Form eines Strangpressprofils oder in Form einer zumindest bereichsweise umgeformten Platte ausgestaltet ist, wobei das Trägerelement (11) zumindest bereichsweise ausgebildete Befestigungsabschnitte (13) aufweist.

9. Schutzanordnung nach Anspruch 8, wobei die zumindest bereichsweise ausgebildeten Befestigungsabschnitte (13) des Trägerelements (11) dazu eingerichtet sind, das mindestens eine Hitzeschutzelement (12) am Trägerelement (11) zu befestigen und/oder das mindestens eine Hitzeschutzelement (12) zumindest bereichsweise zwischen dem Trägerelement (11) und mindestens einer Wandung (111, 112) zu befestigen.

10. Schutzanordnung nach einem der Ansprüche 1 bis 9, wobei das mindestens eine Hitzeschutzelement (12) einlagig und/oder mehrlagig ausgestaltet ist, wobei das mindestens eine Hitzeschutzelement (12) aus einem Metall, einer Metalllegierung, einer Keramik oder einem Keramikfaserverbundwerkstoff, einem Glas oder einem Glasfaserverbundwerkstoff, einem mineralischen Werkstoff oder Verbundwerkstoff, einem Kohlenstoff oder einem Kohlenstoffverbundwerkstoff hergestellt ist.

11. Schutzanordnung nach einem der Ansprüche 1 bis 10, wobei die mindestens eine Berstmembran (30) in einen Abschnitt des Trägerelements (11) integriert ist, oder
wobei die Berstmembran (30) an einer dem Hitzeschutzelement (12) zugewandten Seite des Trägerelements (11) mit dem Trägerelement (11) verbunden ist, oder
wobei die Berstmembran (30) an einer dem Hitzeschutzelement (12) abgewandten Seite des Trägerelements (11) mit dem Trägerelement (11) verbunden ist.

12. Schutzanordnung nach einem der Ansprüche 1 bis 11, wobei das mindestens eine Trägerelement (11) dazu eingerichtet ist, mit mindestens einer Wandung (111, 112) verbunden zu werden, wobei das Trägerelement (11) durch die mindestens eine Wandung (111, 112) hindurch verbindbar ist oder wobei das Trägerelement (11) durch das Trägerelement (11) hindurch mit der mindestens einen Wandung (111, 112) verbindbar ist.

13. Schutzanordnung nach einem der Ansprüche 1 bis 12, wobei die mindestens eine Wandung als eine Wandung (111, 112) eines Zellgehäuses (110) oder als eine Wandung eines Zelldeckels ausgestaltet ist.

14. Batteriezelle (100), aufweisend ein Zellgehäuse (110) mit mindestens zwei Wandungen (111, 112) und mindestens einen Zelldeckel mit mindestens einer Wandung, wobei das Zellgehäuse (110) durch den mindestens einen Zelldeckel fluiddicht verschlossen ist und mindestens ein Elektrodenpaket (120) in einem Innenvolumen (V) des Zellgehäuses (110) angeordnet ist, wobei das Zellgehäuse (110) und/oder der Zelldeckel eine thermische Schutzanordnung (10) gemäß einem der vorhergehenden Ansprüche aufweist, welche im Bereich einer, insbesondere gehäuseseitigen, Berstmembran (30) angeordnet ist oder eine Berstmembran (30) aufweist.
